# EUROPEAN PATENT APPLICATION

(11) **EP 4 804 621 A1**
(43) Date of publication of application: **09.09.2026**
(21) Application number: 24909852.6
(22) Date of filing: 16.08.2024
(51) Int. Cl.: H04W 36/00

(54) **CELL CAMPING METHOD AND APPARATUS**

(30) Priority: 28.12.2023 CN 202311870545
(71) Applicant: Honor Device Co., Ltd., Shenzhen, Guangdong 518040 (CN)
(72) Inventor: WEI, Zhenrong, Shenzhen, Guangdong 518040 (CN)
(74) Representative: Gill Jennings & Every LLP
(86) International application number: PCT/CN2024/112803
(87) International publication number: WO 2025/138901

(57) **Abstract**

Embodiments of this application provide a cell camping method and apparatus, which relate to the field of communication, to avoid a problem that a terminal device cannot camp on a candidate cell because Qrxlevmin configured based on a network is improper. The method is: A terminal device performs cell searching, where a found cell includes a first cell; the terminal device obtains a minimum receiving power threshold of the first cell; if the minimum receiving power threshold is greater than a first preset threshold value, replaces the minimum receiving power threshold with a second preset threshold value, where the first preset threshold value is greater than or equal to the second preset threshold value; and determines, according to the second preset threshold value, whether to camp on the first cell.

## Description

This application claims priority to Chinese Patent Application No. 202311870545.3, filed with the China National Intellectual Property Administration on December 28, 2023 and entitled "CELL CAMPING METHOD AND APPARATUS", which is incorporated herein by reference in its entirety.

### TECHNICAL FIELD

Embodiments of this application relate to the field of communication, and in particular, to a cell camping method and apparatus.

### BACKGROUND

When selecting a cell to camp on, a terminal device may determine whether the cell meets a standard to camp on based on a measurement result (a network environment parameter) of the cell. If the cell meets a standard S, a UE may camp on the cell. The cell meets the standard S, that is, a receiving power Srxlev corresponding to the cell is greater than 0 dB. 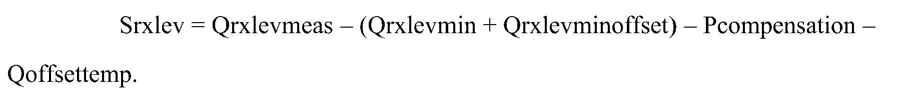Srxlev = Qrxlevmeas - (Qrxlevmin + Qrxlevminoffset) - Pcompensation - Qoffsettemp.

Srxlev represents the receiving power of the cell (a signal strength of the cell), and Qrxlevmeas represents a reference signal receiving power of the cell; Qrxlevmin represents a minimum receiving power threshold for cell camping, and Qrxlevminoffset represents a minimum receiving level shift when a terminal device camps on a visited public land mobile network (visited public land mobile network, VPLMN) cell; and Pcompensation represents a maximum value between a difference obtained by subtracting a maximum available uplink transmit power of a terminal device from a maximum radio-frequency output power of the terminal device and 0. Qoffsettemp is a penalty factor that is introduced for a cell in which a T300 timer expires for a plurality of times.

However, in an actual network environment, a problem that Qrxlevmin that is configured based on a network is improper may occur, resulting in that the terminal device cannot camp on a candidate cell.

### SUMMARY

Embodiments of this application provide a cell camping method and apparatus, to avoid a problem that a terminal device cannot camp on a candidate cell because Qrxlevmin that is configured based on a network is improper.

To achieve the foregoing objective, the following technical solutions are used in the embodiments of this application.

According to a first aspect, a cell camping method is provided, including: A terminal device performs cell searching, where a found cell includes a first cell; the terminal device obtains a minimum receiving power threshold of the first cell; if the minimum receiving power threshold is greater than a first preset threshold value, replaces the minimum receiving power threshold with a second preset threshold value, where the first preset threshold value is greater than or equal to the second preset threshold value; and determines, according to the second preset threshold value, whether to camp on the first cell.

Based on the method provided in the embodiments of this application, when the minimum receiving power threshold (Qrxlevmin) of the first cell is greater than the first preset threshold value, it indicates that Qrxlevmin of the first cell is excessively great. In this case, Qrxlevmin of the first cell may be adjusted. For example, Qrxlevmin of the first cell is replaced with the second preset threshold value, and then whether to camp on the first cell is determined according to the second preset threshold value. In this way, a problem that the terminal device cannot camp on the first cell because Qrxlevmin configured by the first cell is excessively great may be avoided.

In a possible implementation, that whether to camp on the first cell is determined according to the second preset threshold value includes: The terminal device camps on the first cell when a reference signal receiving power of the first cell is greater than the second preset threshold value.

In a possible implementation, the method further includes: if the minimum receiving power threshold is less than a third preset threshold value, replacing the minimum receiving power threshold with a fourth preset threshold value, and determining, according to the fourth preset threshold value, whether to camp on the first cell, where the third preset threshold value is less than or equal to the fourth preset threshold value. When the minimum receiving power threshold (Qrxlevmin) of the first cell is less than the third preset threshold value, it indicates that Qrxlevmin of the first cell is excessively small (that is, less than minimum receiving power thresholds of a majority of cells). In this case, Qrxlevmin of the first cell may be adjusted. For example, Qrxlevmin of the first cell is replaced with the fourth preset threshold value, and then whether to camp on the first cell is determined according to the fourth preset threshold value. In this way, a problem that because Qrxlevmin configured by the first cell is excessively small, a signal is weak after the terminal device camps on the first cell, and then the terminal device quickly switches to another cell or another network may be avoided.

In a possible implementation, that whether to camp on the first cell is determined according to the fourth preset threshold value includes: The terminal device camps on the first cell when the reference signal receiving power of the first cell is greater than the fourth preset threshold value.

In a possible implementation, the third preset threshold value is less than the first preset threshold value.

In a possible implementation, the method further includes: when the terminal device meets a first condition, if the minimum receiving power threshold is greater than the first preset threshold value, replacing the minimum receiving power threshold with a fifth preset threshold value, and determining, according to the fifth preset threshold value, whether to camp on the first cell, where the fifth preset threshold value is less than the second preset threshold value, where the first condition met by the terminal device includes at least one of the following: the terminal device is in a screen-off state, the terminal device does not enable a preset application, the terminal device does not enable a game mode, and the terminal device is in a first preset state, where the first preset state includes: a displacement of the terminal device in a preset time period is greater than or equal to a first preset threshold, or an average acceleration/speed of the terminal device in a preset time period is greater than or equal to a second preset threshold. It may be understood that, when the terminal device meets the first condition, the terminal device has a relatively low requirement on network quality. If Qrxlevmin of the first cell is greater than the first preset threshold value, Qrxlevmin of the first cell may be replaced with the fifth preset threshold value instead of the second preset threshold value, to avoid a problem that the terminal device cannot camp on the first cell in a timely manner because the second preset threshold value is relatively great.

In a possible implementation, the method further includes: when the terminal device meets the first condition, if the minimum receiving power threshold is less than the third preset threshold value, replacing the minimum receiving power threshold with a sixth preset threshold value, and determining, according to the sixth preset threshold value, whether to camp on the first cell, where the sixth preset threshold value is less than the fourth preset threshold value. It may be understood that, when the terminal device meets the first condition, the terminal device has the relatively low requirement on the network quality. If Qrxlevmin of the first cell is less than the third preset threshold value, Qrxlevmin of the first cell may be replaced with the sixth preset threshold value instead of the fourth preset threshold value, to avoid a problem that the terminal device cannot camp on the first cell in a timely manner because the fourth preset threshold value is relatively great.

In a possible implementation, the method further includes: when the terminal device meets a second condition, if the minimum receiving power threshold is greater than the first preset threshold value, replacing the minimum receiving power threshold with a seventh preset threshold value, and determining, according to the seventh preset threshold value, whether to camp on the first cell, where the seventh preset threshold value is greater than the second preset threshold value, where the second condition met by the terminal device includes at least one of the following: the terminal device is in a screen-on state, the terminal device enables a preset application, the terminal device enables a game mode, and the terminal device is in a second preset state, where the second preset state includes a displacement of the terminal device in a preset time period is less than the first preset threshold, or an average acceleration/speed of the terminal device in a preset time period is less than the second preset threshold. It may be understood that, when the terminal device meets the second condition, the terminal device has a relatively high requirement on the network quality. If Qrxlevmin of the first cell is greater than the first preset threshold value, Qrxlevmin of the first cell may be replaced with the seventh preset threshold value instead of the second preset threshold value, to avoid a problem that because the second preset threshold value is relatively small, the signal is weak after the terminal device camps on the first cell.

In a possible implementation, the method further includes: when the terminal device meets the second condition, if the minimum receiving power threshold is less than the third preset threshold value, replacing the minimum receiving power threshold with an eighth preset threshold value, and determining, according to the eighth preset threshold value, whether to camp on the first cell, where the eighth preset threshold value is greater than the fourth preset threshold value. It may be understood that, when the terminal device meets the second condition, the terminal device has the relatively high requirement on the network quality. If Qrxlevmin of the first cell is less than the third preset threshold value, Qrxlevmin of the first cell may be replaced with the eighth preset threshold value instead of the fourth preset threshold value, to avoid a problem that because the second preset threshold value is relatively small, the signal is weak after the terminal device camps on the first cell.

In a possible implementation, the second preset threshold value or the fourth preset threshold value is determined according to minimum receiving power thresholds of a plurality of cells.

In a possible implementation, after the terminal device camps on the first cell, the method further includes: recording service performance of the terminal device, where the service performance includes normal service performance and abnormal service performance; and if a total amount of the service performance of the terminal device is greater than a third preset threshold and a ratio of an amount of the abnormal service performance to the total amount of the service performance is greater than a fourth preset threshold, stopping adjusting the minimum receiving power threshold. In this way, after adjusting Qrxlevmin of the first cell and camping on the first cell, the terminal device may perform a close loop feedback according to an adjustment result, to ensure that Qrxlevmin of the first cell is more properly adjusted.

In a possible implementation, the abnormal service performance includes at least one of the following: a data service lag, an abnormality in an incoming call, a voice lag in a call.

In a possible implementation, the method further includes: sending, to a cloud server, the total amount of the service performance recorded by the terminal device, where the total amount of the service performance includes an amount of the normal service performance and the amount of the abnormal service performance.

In a possible implementation, the method further includes: receiving first indication information from the cloud server, where the first indication information is used to indicate to stop adjusting the minimum receiving power threshold of the first cell.

According to a second aspect, a communication method is provided, including: A cloud server receives an amount of service performance that is separately recorded after a plurality of terminal devices adjust a minimum receiving power threshold of a first cell and camp on the first cell, where the service performance includes normal service performance and abnormal service performance; and respectively sends first indication information to the plurality of the terminal devices if a total amount of the service performance of the plurality of the terminal devices is greater than a fifth preset threshold and a ratio of an amount of the abnormal service performance of the plurality of the terminal devices to the total amount of the service performance of the plurality of terminal devices is greater than a sixth preset threshold, where the first indication information is used to indicate to stop adjusting the minimum receiving power threshold of the first cell. In this way, for a case in which an abnormality occurs after the terminal device adjusts the minimum receiving power threshold of the first cell, the cloud server may indicate the terminal device to stop adjusting the minimum receiving power threshold (Qrxlevmin) configured based on the network, to avoid a problem that a service abnormality occurs when the terminal device camps on the cell.

In a possible implementation, the abnormal service performance includes at least one of the following: a data service lag, an abnormality in an incoming call, a voice lag in a call.

According to a third aspect, this application provides a computer-readable storage medium. The computer-readable storage medium includes computer instructions. When the computer instructions are run on a terminal device (for example, a mobile phone), the terminal device is enabled to perform the method according to the first aspect and any possible design thereof. When the computer instructions are run on a cloud server, the cloud server is enabled to perform the method according to the second aspect and any possible design thereof.

According to a fourth aspect, this application provides a computer program product. When the computer program product is run on a computer, the computer is enabled to perform the method according to the first aspect and any possible design thereof.

According to a fifth aspect, an embodiment of this application provides a communication apparatus, including a processor, where the processor is coupled to a memory, and the memory stores program instructions. When the program instructions stored in the memory are executed by the processor, the apparatus is enabled to perform the method according to the first aspect or the second aspect and any possible design thereof. The apparatus may be a terminal device or a cloud server; or may be a component, such as a chip, in a terminal device or a cloud server.

According to a sixth aspect, an embodiment of this application provides a communication apparatus. The apparatus may be divided into different logical units or modules according to functions, and the units or modules perform different functions, to enable the apparatus to perform the method according to the first aspect or the second aspect and any possible design thereof.

According to a seventh aspect, an embodiment of this application provides a communication system, including a terminal device and a cloud server. The terminal device and the cloud server separately perform some steps, and cooperate with each other to implement the method according to the first aspect or the second aspect and any possible design thereof.

According to an eighth aspect, this application provides a chip system. The chip system includes one or more interface circuits and one or more processors. The interface circuits and the processors are interconnected by lines.

The chip system may be applied to a terminal device including a communication module and a memory or a cloud server. The interface circuits are configured to receive signals from a memory of the terminal device or the cloud server, and send the received signals to the processors, where the signals include computer instructions stored in the memory. When the processors execute the computer instructions, the terminal device may perform the method according to the first aspect and any possible design thereof, and the cloud server may perform the method according to the second aspect and any possible design thereof.

It may be understood that, for beneficial effects that can be achieved by the computer-readable storage medium described in the third aspect, the computer program product described in the fourth aspect, the apparatus described in the fifth aspect and the sixth aspect, the system described in the seventh aspect, and the chip system described in the eighth aspect that are provided above, reference may be made to the beneficial effects in the first aspect and any possible design thereof, and details are not described herein again.

### BRIEF DESCRIPTION OF DRAWINGS

FIG. 1 is a schematic diagram of a system architecture according to an embodiment of this application;
FIG. 2 is a schematic diagram of a hardware structure of a terminal device according to an embodiment of this application;
FIG. 3 is a schematic structural diagram of a cloud server according to an embodiment of this application;
FIG. 4 is a schematic flowchart of a cell camping method according to an embodiment of this application;
FIG. 5 is a schematic flowchart of another cell camping method according to an embodiment of this application;
FIG. 6 is a schematic flowchart of still another cell camping method according to an embodiment of this application;
FIG. 7 is a schematic diagram of interaction between a terminal device and a cloud server according to an embodiment of this application;
FIG. 8 is a schematic diagram of a determining logic according to an embodiment of this application;
FIG. 9 is a schematic diagram of another determining logic according to an embodiment of this application; and
FIG. 10 is a schematic structural diagram of a chip system according to an embodiment of this application.

### DESCRIPTION OF EMBODIMENTS

The following describes technical solutions in embodiments of this application with reference to the accompanying drawings in the embodiments of this application. In descriptions of this application, unless otherwise specified, "at least one" means one or more and "a plurality of" means two or more. In addition, for ease of describing the technical solutions in the embodiments of this application clearly, in the embodiments of this application, terms such as "first" and "second", are used to distinguish same or similar items with basically same functions and purposes. A person skilled in the art may understand that the terms "first" and "second" do not limit a quantity and an execution sequence thereof, and the terms "first" and "second" do not necessarily limit difference.

In an actual network environment, a problem of improper Qrxlevmin configured based on a network may occur, resulting in a problem that a terminal device cannot camp on a cell or a signal is weak after the terminal device camps on a cell.

This application provides a cell camping method and apparatus, to adjust Qrxlevmin configured based on the cell (for example, a first cell), and then determine whether to camp on the cell (for example, the first cell) according to an adjusted threshold value. In this way, a problem that the terminal device cannot camp on the first cell because Qrxlevmin configured by the first cell is excessively great may be avoided. Alternatively, a problem that because Qrxlevmin configured by the first cell is excessively small, a signal is weak after the terminal device camps on the first cell, and then the terminal device quickly switches to another cell or another network.

This application is applicable to a scenario in which a camping threshold (for example, Qrxlevmin) is adjusted. This application is further applicable to a scenario in which another threshold (for example, a cell reselection threshold, an intra-frequency measurement threshold, or an inter-frequency measurement threshold) is adjusted. This is not limited in this application.

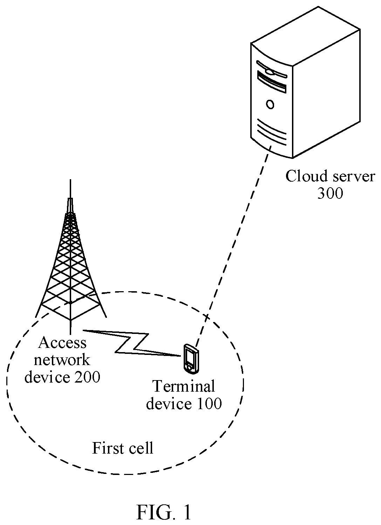

FIG. 1 is a schematic diagram of a communication system according to an embodiment of this application. The communication system may include a terminal device 100, an access network device 200, and a cloud server 300. The access network device 200 may cover one or more cells. For example, an access network device 1 covers a first cell. The terminal device 100 may camp on a cell (for example, the first cell) of the access network device 200. The terminal device may further communicate with the cloud server. For example, in an embodiment of this application, the terminal device 100 may send, to the cloud server 300, an amount of service performance separately recorded after the terminal device adjusts a minimum receiving power threshold of the first cell and camps on the first cell. The amount of the service performance includes an amount of normal service performance and an amount of abnormal service performance.

The access network device may include a 5G base station and a 4G base station. The 5G base station may be, for example, a next generation base station (next generation NodeB, gNB). The 4G base station may be, for example, an evolved base station (evolved Node B, eNB). The access network device communicates with a core network device through a wired network or a wireless network (not shown in FIG. 1).

The terminal device 100 may include various user equipments (user equipments, UEs) having a wireless communication function, handheld devices, vehicle-mounted devices, wearable devices (for example, a smart watch or a smart bracelet), mobile internet devices (mobile internet devices, MIDs), computing devices, or other processing devices connected to a wireless modem; and may further include a subscriber unit (subscriber unit), a cellular phone(cellular phone), a smart phone (smart phone), a wireless data card, a personal digital assistant (personal digital assistant, PDA) computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a user equipment (user equipment, UE), a mobile station (mobile station, MS), a relay user equipment, or the like. In this embodiment of this application, the terminal device may be an independently sold device, or may be a chip in a terminal.

It may be understood that, units shown in FIG. 1 do not constitute a specific limitation on the communication system. The communication system may further include more or fewer units than those shown in the figure, or some units may be combined, or some units may be separated, or a different unit deployment may be used. This is not limited in this application.

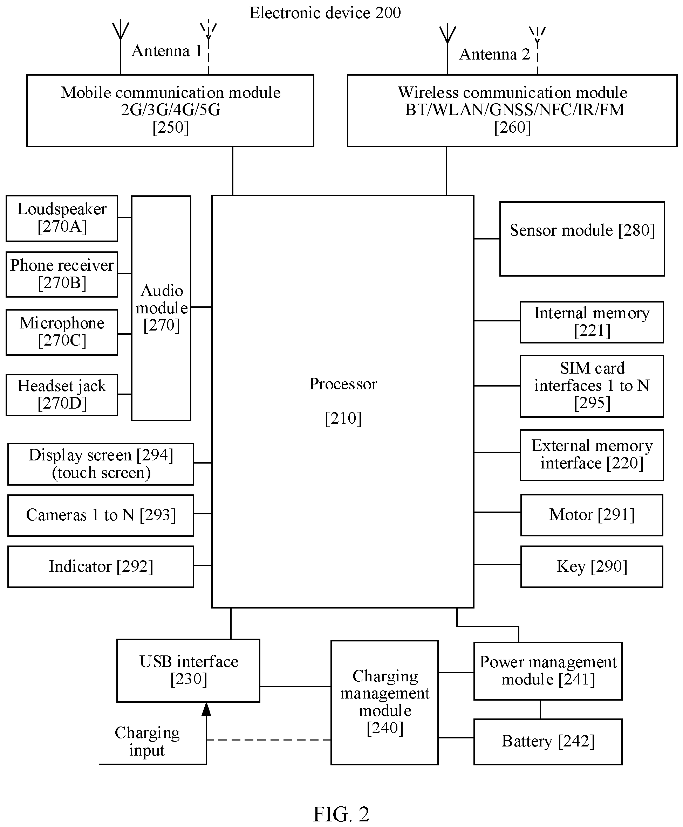

As shown in FIG. 2, in an embodiment of this application, an electronic device 200 (for example, a mobile phone) is used as an example to describe a structure of the terminal device provided in this embodiment of this application. The electronic device 200 (for example, a mobile phone) may include a processor 210, an external memory interface 220, an internal memory 221, a universal serial bus (universal serial bus, USB) interface 230, a charging management module 240, a power management unit 241, a battery 242, an antenna 1, an antenna 2, a mobile communication module 250, a wireless communication module 260, an audio module 270, a loudspeaker 270A, a phone receiver 270B, a microphone 270C, a headset jack 270D, a sensor module 280, a key 290, a motor 291, an indicator 292, a camera 293, a display screen 294, a subscriber identity module (subscriber identification module, SIM) card interface 295, and the like.

The sensor module 280 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, and a touch sensor, an ambient light sensor, and a bone conduction sensor.

It may be understood that the schematic structure in this embodiment constitutes no specific limitation on the electronic device 200. In some other embodiments, the electronic device 200 may include more or fewer components than those shown in the figures, or some components may be combined, or some components may be split, or components are arranged in different manners. The components in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent devices, or may be integrated into one or more processors.

The controller may be a nerve center and a command center of the electronic device 200. The controller may generate an operating control signal according to an instruction operation code and a sequence signal, to complete control of fetching and executing an instruction.

A memory may be further configured in the processor 210, to store an instruction and data. In some embodiments, the memory in the processor 210 is a cache memory. The memory may store an instruction or data that has just been used or cyclically used by the processor 210. If the processor 210 needs to use the instruction or the data again, the processor 210 may directly invoke the instruction or the data from the memory, to avoid repeated access and reduce a waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules in this embodiment is merely an example for description, and constitutes no limitation on the structure of the electronic device 200. In some other embodiments, the electronic device 200 may alternatively use an interface connection manner different from that in the foregoing embodiment, or use a combination of a plurality of interface connection manners.

The charging management module 240 is configured to receive a charging input from a charger. The charger may be a wireless charger or a wired charger. The charging management module 240 may further supply power to the electronic device by using the power management module 241 while charging the battery 242.

The power management module 241 is configured to connect to the battery 242, the charging management module 240, and the processor 210. The power management module 241 receives input from the battery 242 and/or the charging management module 240, to supply power to the processor 210, the internal memory 221, an external memory, the display screen 294, the camera 293, the wireless communication module 260, and the like. In some embodiments, the power management module 241 and the charging management module 240 may also be disposed in a same device.

A wireless communication function of the electronic device 200 may be implemented by using the antenna 1, the antenna 2, the mobile communication module 250, the wireless communication module 260, the modem processor, the baseband processor, and the like. In some embodiments, in the electronic device 200, the antenna 1 is coupled to the mobile communication module 250, and the antenna 2 is coupled to the wireless communication module 260, so that the electronic device 200 can communicate with a network and another device by using a wireless communication technology.

The antenna 1 and the antenna 2 are configured to transmit or receive an electromagnetic wave signal. Each antenna in the electronic device 200 may be configured to cover one or more communication frequency bands. Different antennas may also be multiplexed to improve utilization of the antennas. For example, the antenna 1 may be multiplexed as a diversity antenna of a wireless local area network. In some other embodiments, the antenna may be used in combination with a tuning switch.

The mobile communication module 250 may provide a solution to wireless communication such as 2G/3G/4G/5G applied to the electronic device 200. The mobile communication module 250 may include at least one filter, a switch, a power amplifier, and a low noise amplifier (low noise amplifier, LNA). The mobile communication module 250 may receive an electromagnetic wave through the antenna 1, perform processing such as filtering and amplification on the received electromagnetic wave, and transmit a processed electromagnetic wave to the modem processor for demodulation.

The mobile communication module 250 may further amplify a signal modulated by the modem processor, and convert the signal into an electromagnetic wave for radiation through the antenna 1. In some embodiments, at least some function modules of the mobile communications module 250 may be disposed in the processor 210. In some embodiments, at least some function modules of the mobile communications module 250 and at least some modules of the processor 210 may be disposed in a same component.

The wireless communication module 260 may provide solutions for wireless communication including a WLAN (such as a (wireless fidelity, Wi-Fi) network), a Bluetooth (bl electronic device tooth, BT), a global navigation satellite system (global navigation satellite system, GNSS), frequency modulation (frequency modulation, FM), a near field communication (near field communication, NFC) technology, and an infrared (infrared, IR) technology, and the like to be applied to the electronic device 200.

The GNSS may include a beidou navigation satellite system (beidou navigation satellite system, BDS), a global positioning system (global positioning system, GPS), a global navigation satellite system (global navigation satellite system, GLONASS), a quasi-zenith satellite system (quasi-zenith satellite system, QZSS), and/or a satellite based augmentation system (satellite based augmentation systems, SBAS).

The wireless communication module 260 may be one or more devices integrating at least one communication processing module. The wireless communication module 260 receives an electromagnetic wave by using the antenna 2, performs frequency modulation and filtering processing on an electromagnetic wave signal, and sends a processed signal to the processor 210. The wireless communication module 260 may alternatively receive a to-be-sent signal from the processor 210, perform frequency modulation and amplification on the to-be-sent signal, and convert the signal into an electromagnetic wave for radiation by using the antenna 2.

The electronic device 200 implements a display function by using the GPU, the display screen 294, the application processor, and the like. The GPU is a microprocessor for image processing, and is connected to the display screen 294 and the application processor. The GPU is configured to perform mathematical and geometric calculation, and is configured to render graphics. The processor 210 may include one or more GPUs, and execute program instructions to generate or change display information.

The display screen 294 is configured to display an image, a video, and the like. The display screen 294 includes a display panel.

The electronic device 200 may implement a photographing function by using the ISP, the camera 293, the video codec, the GPU, the display screen 294, the application processor, and the like. The ISP is configured to process data fed back by the camera 293. The camera 293 is configured to capture a static image or a video. In some embodiments, the electronic device 200 may include one or N cameras 293, and N is a positive integer greater than 1.

The external memory interface 220 may be configured to connect to an external storage card, for example, a micro SD card, to expand a storage capability of the electronic device 200. The external storage card communicates with the processor 210 by using the external memory interface 220, to implement a data storage function. For example, a file such as a music or a video is stored in the external storage card.

The internal memory 221 may be configured to store computer-executable program code, and the executable program code includes instructions. The processor 210 runs the instructions stored in the internal memory 221, to perform various function applications and data processing of the electronic device 200. For example, in this embodiment of this application, the processor 210 may execute the instructions stored in the internal memory 221, and the internal memory 221 may include a program storage area and a data storage area.

The program storage area may store an operating system, an application required by at least one function (for example, a sound playing function or an image playing function), and the like. The data storage area may store data (for example, audio data and an address book) and the like created when the electronic device 200 is used. In addition, the internal memory 221 may include a high-speed random access memory, and may also include a non-volatile memory, for example, at least one magnetic disk storage device, a flash memory device, or a universal flash storage (universal flash storage, UFS).

The electronic device 200 may implement an audio function by using the audio module 270, the loudspeaker 270A, the phone receiver 270B, the microphone 270C, the headset jack 270D, the application processor, and the like, for example, music playback and recording.

The key 290 includes a power key, a volume key, and the like. The key 290 may be a mechanical key, or may be a touch key. The motor 291 may generate a vibration prompt. The motor 291 may be configured to provide a vibration prompt for an incoming call, and may be further configured to provide a touch vibration feedback. The indicator 292 may be an indicator light, and may be configured to indicate a charging state or a battery change, or may be further configured to indicate a message, a missed call, a notification, or the like. The SIM card interface 295 is configured to connect to a SIM card. The SIM card may be inserted into the SIM card interface 295 or plugged from the SIM card interface 295, to come into contact with or be separated from the electronic device 200. The electronic device 200 may support one or N SIM card interfaces. N is a positive integer greater than 1. The SIM card interface 295 may support a Nano SIM card, a micro SIM card, a SIM card, and the like.

Information stored on the SIM card may include: 1. original system data (the original system data cannot be modified because the original system data is hard-coded) stored by a manufacturer of the SIM card; 2. a network parameter and user data that are injected by a mobile operator when issuing the card to a user which include authentication and encryption information, an algorithm, and a parameter (which can be viewed and updated only by a professional department); 3. data stored by the user, which includes a short message, an address book, and the like (which can be read, written, and updated by a mobile phone); and 4. data that is related to network connection and user information and that is automatically stored and updated when the user uses the card which includes location information obtained from latest location registration, a temporary mobile user number, and the like (which can be read, written, and updated by the mobile phone).

When the SIM card is used in the mobile phone, the mobile phone sends a command to the SIM card, and the SIM card executes the command according to a standard specification and feeds back a result.

It may be understood that the structure in this embodiment of this application does not constitute no specific limitation on the electronic device 200. In some other embodiments of this application, the electronic device 200 may include more or fewer components than those shown in the figure, or some components may be combined, or some components may be divided, or different component arrangements may be used. The components in the figure may be implemented by hardware, software, or a combination of software and hardware.

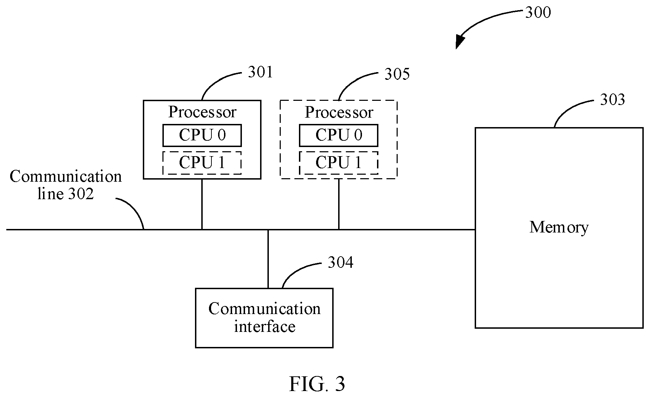

The cloud server in this embodiment of this application may be implemented through a communication device in FIG. 3. The communication device 300 includes at least one processor 301, a communication line 302, a memory 303, and at least one communication interface 304.

The processor 301 may be a central processing unit (central processing unit, CPU), a microprocessor, an application-specific integrated circuit (application-specific integrated circuit, ASIC), or one or more integrated circuits configured to control execution of a program in the solutions of this application.

The communication line 302 may include a channel, to transmit information between the foregoing components. The communication line may be a bus.

The communication interface 304 uses any apparatus of a transceiver type to communicate with another device or a communication network such as an Ethernet, a radio access network (radio access network, RAN), a wireless local area network (wireless local area networks, WLAN), and the like.

The memory 303 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another compact disc storage and optical disc storage (including a compressed optical disc, a laser disc, an optical disc, a digital versatile optical disc, a Blu-ray disc, and the like), a magnetic disk storage medium, or another magnetic storage device, or any another medium that can be used to carry or store expected program code in the form of instructions or a data structure and that can be accessed by a computer, but not limited thereto. The memory may exist independently, and connect to the processor by using the communication line 302. Alternatively, the memory may be integrated with the processor.

The memory 303 is configured to store computer-executable instructions for performing the solutions of this application, and is controlled and executed by the processor 301. The processor 301 is configured to execute the computer-executable instructions stored in the memory 303 to implement the method provided in the embodiments of this application.

Optionally, the computer-executable instructions in this embodiment of this application may also be referred to as application code. This is not specifically limited in this embodiment of this application.

In a specific implementation, in an embodiment, the processor 301 may include one or more CPUs, for example, a CPU 0 and a CPU 1 in FIG. 3.

In a specific implementation, in an embodiment, the communication device 300 may include a plurality of processors, for example, the processor 301 and a processor 305 in FIG. 3. Each of these processors may be a single-core (single-CPU) processor, or may be a multi-core (multi-CPU) processor. The processor herein may be one or more devices or circuits, and/or a processing core configured to process data (for example, computer program instructions).

The communication device 300 may be a general-purpose device or a dedicated device. In a specific implementation, the communication device 300 may be the cloud server, a desktop computer, a portable computer, a network server, or a device having a similar structure in FIG. 3. A type of the communication device 300 is not limited in this embodiment of this application.

The embodiments of this application do not specifically limit a specific structure of an execution body of the method provided in the embodiments of this application, as long as the program in which the code of the method provided in the embodiments of this application is recorded can be executed for communication according to the embodiments of this application. For example, the execution body of the method provided in the embodiments of this application may be the terminal device or the cloud server, or a functional module in the terminal device or the cloud server that can call a program and execute the program.

Network architectures and service scenarios described in the embodiments of this application aim to more clearly describe the technical solutions in the embodiments of this application, but are not intended to limit the technical solutions provided in the embodiments of this application. A person of ordinary skill in the art may know that as the network architectures evolve and a new service scenario emerges, the technical solutions provided in the embodiments of this application are further applicable to a similar technical problem.

For ease of understanding, the cell camping method provided in the embodiments of this application is described below in detail with reference to the accompanying drawings.

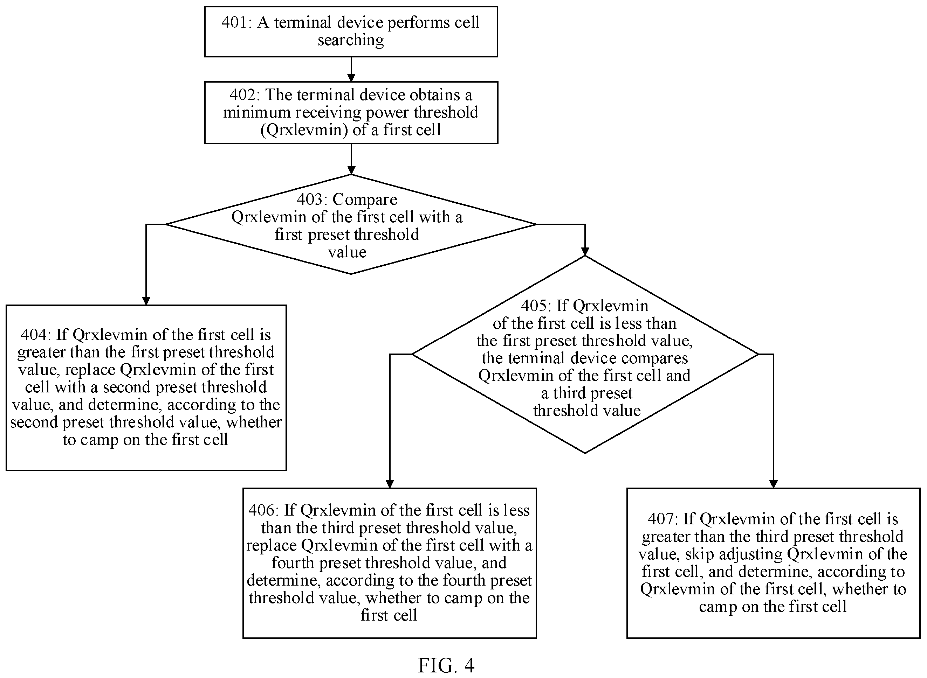

As shown in FIG. 4, an embodiment of this application provides a cell camping method, including the following steps.

401: A terminal device performs cell searching.

The terminal device may perform cell searching after being powered-on, or perform cell searching after a communication card is loaded, or perform cell searching after a communication transceiver apparatus of the terminal device is enabled (for example, the terminal device cancels an airplane mode). It should be noted that, in a practical application, the terminal device may alternatively trigger cell searching through another operation. This is not limited in this application.

A cell found by the terminal device may include a plurality of cells. Descriptions are provided in the following embodiments by using an example in which the cell found by the terminal device includes the first cell.

402: The terminal device obtains a minimum receiving power threshold of the first cell.

The terminal device may obtain the minimum receiving power threshold (Qrxlevmin) of the first cell through a SIB message.

For example, Qrxlevmin may be obtained from an information element q-RxLevMin in a SIB1, a SIB2, or a SIB4. In addition, if a Qrxlevmin offset (Qrxlevminoffset) exists in a SIB3 and the SIB4 of the cell (for example, the first cell), the Qrxlevminoffset may be added to corresponding Qrxlevmin to reach a required minimum receiving power level. (Qrxlevmin is obtained from q-RxLevMin in SIB1, SIB2 and SIB4, additionally, if Qrxlevminoffsetcell is present in SIB3 and SIB4 for the concerned cell, this cell specific offset is added to the corresponding Qrxlevmin to achieve the required minimum RX level in the concerned cell).

403: The terminal device compares a Qrxlevmin of the first cell with a first preset threshold value.

If Qrxlevmin of the first cell is greater than the first preset threshold value, step 404 may be performed. If Qrxlevmin of the first cell is less than the first preset threshold value, step 405 may be performed.

404: If Qrxlevmin of the first cell is greater than the first preset threshold value, replace Qrxlevmin of the first cell with a second preset threshold value, and determine, according to the second preset threshold value, whether to camp on the first cell.

The first preset threshold value is greater than or equal to the second preset threshold value. The first preset threshold value and the second preset threshold value may be preset in the terminal device in advance.

The second preset threshold value may be determined according to minimum receiving power thresholds of a plurality of cells. For example, the second preset threshold value may be an average value of the minimum receiving power thresholds of the plurality of cells.

Because the second preset threshold value is determined according to the minimum receiving power thresholds of the plurality of cells, and the second preset threshold value is less than or equal to the first preset threshold value. If Qrxlevmin of the first cell is greater than the first preset threshold value, it indicates that Qrxlevmin of the first cell is excessively great (that is, greater than the minimum receiving power thresholds of a majority of cells), which is not proper. Therefore, Qrxlevmin of the first cell may be adjusted. For example, Qrxlevmin of the first cell is replaced with the second preset threshold value, and then whether to camp on the first cell is determined according to the second preset threshold value, to avoid a problem that the terminal device cannot camp on the first cell because Qrxlevmin configured by the first cell is excessively great.

It should be noted that a difference between the first preset threshold value and the second preset threshold value (for example, a difference ranging from 5 dB to 10 dB) may be used to prevent unnecessary threshold adjustment. For description, it may be assumed that the first preset threshold value is equal to the second preset threshold value, for example, both the first preset threshold value and the second preset threshold value are -120 dB. It is assumed that Qrxlevmin of the first cell is -119 dB. In this case, although Qrxlevmin (-119 dB) of the first cell is greater than the first preset threshold value (-120 dB), a difference between Qrxlevmin of the first cell and the second preset threshold value is not large (for example, the difference is only 1 dB), which cannot indicate that Qrxlevmin (-119 dB) of the first cell is excessively great (that is, greater than the minimum receiving power thresholds of the majority of cells). In this case, it is of little significance to adjust Qrxlevmin of the first cell.

If there is a difference between the first preset threshold value and the second preset threshold value, for example, the first preset threshold value is -110 dB, and the second preset threshold value is -120 dB, that is, there is a difference of 10 dB between the first preset threshold value and the second preset threshold value. It is assumed that Qrxlevmin of the first cell is -100 dB, when Qrxlevmin (-100 dB) of the first cell is greater than the first preset threshold value (-110 dB), it may be considered that a difference between Qrxlevmin of the first cell and the second preset threshold value is relatively great. This is because the first preset threshold value is 10 dB greater than the second preset threshold value. When Qrxlevmin of the first cell is greater than the first preset threshold value, it indicates that Qrxlevmin of the first cell is much greater than the second preset threshold value, that is, Qrxlevmin (-119 dB) of the first cell is excessively great (that is, greater than the minimum receiving power thresholds of the majority of cells), which is not proper. Therefore, Qrxlevmin of the first cell may be adjusted. For example, Qrxlevmin of the first cell is replaced with the second preset threshold value, and then whether to camp on the first cell is determined according to the second preset threshold value, to avoid the problem that the terminal device cannot camp on the first cell because Qrxlevmin configured by the first cell is excessively great.

In some embodiments, after Qrxlevmin of the first cell is replaced with the second preset threshold value, if a reference signal receiving power (Qrxlevmeas) of the first cell is greater than the second preset threshold value, the terminal device may camp on the first cell. The terminal device may obtain the reference signal receiving power of the first cell through measurement. The reference signal receiving power of the first cell may reflect a signal strength of the first cell.

It may be understood that, when the first cell meets a standard S, that is, when a receiving power Srxlev corresponding to the first cell is greater than 0 dB, the terminal device may camp on the first cell. Srxlev = Qrxlevmeas - (Qrxlevmin + Qrxlevminoffset) - Pcompensation - Qoffsettemp. In the embodiments of this application, if Qrxlevmin of the first cell is greater than the first preset threshold value, Qrxlevmin in the calculation formula of Srxlev may be replaced with the second preset threshold value. Generally, Qrxlevminoffset, Pcompensation, and Qoffsettemp are all 0. Therefore, only the reference signal receiving power (Qrxlevmeas) of the first cell and the second preset threshold value need to be compared. When the reference signal receiving power of the first cell is greater than the second preset threshold value, Srxlev > 0 dB, that is, the first cell meets the standard S. Therefore, the first cell may be camped on.

Certainly, if at least one of Qrxlevminoffset, Pcompensation, or Qoffsettemp corresponding to the first cell is not 0, Qrxlevmin in the calculation formula of Srxlev may be replaced with the second preset threshold value, and then the value of Srxlev is calculated. When Srxlev is greater than 0 dB, the terminal device may camp on the first cell.

For example, it is assumed that Qrxlevmin of the first cell is -100 dB, the first preset threshold value is -110 dB, the second preset threshold value is -120 dB, and the reference signal receiving power of the first cell is -105 dB. Because Qrxlevmin (-100 dB) of the first cell is greater than the first preset threshold value (-110 dB), Qrxlevmin of the first cell may be replaced with the second preset threshold value (that is, -100 is replaced with -120). When Qrxlevminoffset, Pcompensation, and Qoffsettemp are all 0, because the reference signal receiving power (-105 dB) of the first cell is greater than the second preset threshold value (-120 dB), that is, Srxlev > 0 dB, the terminal device may camp on the first cell. In this way, the problem that the terminal device cannot camp on the first cell because Qrxlevmin configured by the first cell is excessively great may be avoided.

405: If Qrxlevmin of the first cell is less than the first preset threshold value, the terminal device compares Qrxlevmin of the first cell with a third preset threshold value.

If Qrxlevmin of the first cell is less than the third preset threshold value, step 406 may be performed.

406: If Qrxlevmin of the first cell is less than the third preset threshold value, Qrxlevmin of the first cell is replaced with a fourth preset threshold value, and whether to camp on the first cell is determined according to the fourth preset threshold value.

The third preset threshold value is less than or equal to the fourth preset threshold value. The third preset threshold value and the fourth preset threshold value may be preset in the terminal device in advance.

The fourth preset threshold value may be determined according to the minimum receiving power thresholds of the plurality of cells. The fourth preset threshold value may be equal to the second preset threshold value. Alternatively, the fourth preset threshold value may be less than the second preset threshold value.

Because the fourth preset threshold value is determined according to the minimum receiving power thresholds of the plurality of cells, and the fourth preset threshold value is greater than or equal to the third preset threshold value. If Qrxlevmin of the first cell is less than the third preset threshold value, it indicates that Qrxlevmin of the first cell is excessively small (that is, less than the minimum receiving power thresholds of the majority of cells), which is not proper. Therefore, Qrxlevmin of the first cell may be adjusted. For example, Qrxlevmin of the first cell is replaced with the fourth preset threshold value, and then whether to camp on the first cell is determined according to the fourth preset threshold value, to avoid a problem that because Qrxlevmin configured by the first cell is excessively small, a signal is weak after the terminal device camps on the first cell, and then the terminal device quickly switches to another cell or another network.

It should be noted that a difference between the third preset threshold value and the fourth preset threshold value (for example, a difference ranging from 5 dB to 10 dB) may be used to prevent unnecessary threshold adjustment. For description, it may be assumed that the third preset threshold value is equal to the fourth preset threshold value, for example, both the third preset threshold value and the fourth preset threshold value are -120 dB. It is assumed that Qrxlevmin of the first cell is -121 dB. In this case, although Qrxlevmin (-119 dB) of the first cell is less than the third preset threshold value (-120 dB), a difference between Qrxlevmin of the first cell and the fourth preset threshold value is not large (for example, the difference is only 1 dB), which cannot indicate that Qrxlevmin (-119 dB) of the first cell is excessively small (that is, less than the minimum receiving power thresholds of the majority of cells). In this case, it is of little significance to adjust Qrxlevmin of the first cell.

If there is a difference between the third preset threshold value and the fourth preset threshold value, for example, the third preset threshold value is -130 dB, and the fourth preset threshold value is -120 dB, that is, there is a difference of 10 dB between the third preset threshold value and the fourth preset threshold value. It is assumed that Qrxlevmin of the first cell is -135 dB, when Qrxlevmin (-135 dB) of the first cell is less than the third preset threshold value (-130 dB), it may be considered that a difference between Qrxlevmin of the first cell and the fourth preset threshold value is relatively large. This is because the third preset threshold value is 10 dB less than the fourth preset threshold value. When Qrxlevmin of the first cell is less than the third preset threshold value, it indicates that Qrxlevmin of the first cell is much less than the fourth preset threshold value, that is, Qrxlevmin (-119 dB) of the first cell is excessively small (that is, less than the minimum receiving power thresholds of the majority of cells), which is not proper. Therefore, Qrxlevmin of the first cell may be adjusted. For example, Qrxlevmin of the first cell is replaced with the fourth preset threshold value, and then whether to camp on the first cell is determined according to the fourth preset threshold value, to avoid the problem that because Qrxlevmin configured by the first cell is excessively small, a signal is weak after the terminal device camps on the first cell, and then the terminal device quickly switches to another cell or another network.

In some embodiments, after Qrxlevmin of the first cell is replaced with the fourth preset threshold value, if the reference signal receiving power of the first cell is greater than the fourth preset threshold value, the terminal device may camp on the first cell.

It may be understood that, when the first cell meets the standard S, that is, when the receiving power Srxlev corresponding to the first cell is greater than 0 dB, the terminal device may camp on the first cell. Srxlev = Qrxlevmeas - (Qrxlevmin + Qrxlevminoffset) - Pcompensation - Qoffsettemp. In the embodiments of this application, if Qrxlevmin of the first cell is less than the third preset threshold value, Qrxlevmin in the calculation formula of Srxlev may be replaced with the fourth preset threshold value. Generally, Qrxlevminoffset, Pcompensation, and Qoffsettemp are all 0. Therefore, only the reference signal receiving power (Qrxlevmeas) of the first cell and the fourth preset threshold value need to be compared. When the reference signal receiving power of the first cell is greater than the fourth preset threshold value, Srxlev > 0 dB, that is, the first cell meets the standard S. Therefore, the first cell may be camped on.

Certainly, if at least one of Qrxlevminoffset, Pcompensation, or Qoffsettemp corresponding to the first cell is not 0, Qrxlevmin in the calculation formula of Srxlev may be replaced with the fourth preset threshold value, and then the value of Srxlev is calculated. When Srxlev is greater than 0 dB, the terminal device may camp on the first cell.

For example, it is assumed that Qrxlevmin of the first cell is -140 dB, the third preset threshold value is -130 dB, the fourth preset threshold value is -120 dB, and the reference signal receiving power of the first cell is -105 dB. Because Qrxlevmin (-140 dB) of the first cell is less than the third preset threshold value (-130 dB), Qrxlevmin of the first cell may be replaced with the fourth preset threshold value (that is, -140 is replaced with -120). When Qrxlevminoffset, Pcompensation, and Qoffsettemp are all 0, because the reference signal receiving power (-105 dB) of the first cell is greater than the fourth preset threshold value (-120 dB), that is, Srxlev > 0 dB. Therefore, the terminal device may camp on the first cell. In this way, the problem that because Qrxlevmin configured by the first cell is excessively small, a signal is weak after the terminal device camps on the first cell, and then the terminal device quickly switches to another cell or another network may be avoided.

407: If Qrxlevmin of the first cell is greater than the third preset threshold value, skip adjusting Qrxlevmin of the first cell, and determine, according to Qrxlevmin of the first cell, whether to camp on the first cell.

For example, when Qrxlevminoffset, Pcompensation, and Qoffsettemp are all 0, because the reference signal receiving power of the first cell is greater than Qrxlevmin of the first cell, that is, Srxlev > 0 dB, the terminal device may camp on the first cell.

Based on the method provided in the embodiments of this application, when Qrxlevmin of the first cell is greater than the first preset threshold value, it indicates that Qrxlevmin of the first cell is excessively great (that is, greater than the minimum receiving power thresholds of the majority of cells). In this case, Qrxlevmin of the first cell may be adjusted. For example, Qrxlevmin of the first cell is replaced with the second preset threshold value, and then whether to camp on the first cell is determined according to the second preset threshold value. In this way, the problem that the terminal device cannot camp on the first cell because Qrxlevmin configured by the first cell is excessively great may be avoided. When Qrxlevmin of the first cell is less than the third preset threshold value, it indicates that Qrxlevmin of the first cell is excessively small (that is, less than the minimum receiving power thresholds of the majority of cells). In this case, Qrxlevmin of the first cell may be adjusted. For example, Qrxlevmin of the first cell is replaced with the fourth preset threshold value, and then whether to camp on the first cell is determined according to the fourth preset threshold value. In this way, the problem that because Qrxlevmin configured by the first cell is excessively small, a signal is weak after the terminal device camps on the first cell, and then the terminal device quickly switches to another cell or another network may be avoided.

In some embodiments, before step 403, step 408 may be included.

408: The terminal device determines whether the terminal device meets a first condition or a second condition.

The first condition met by the terminal device includes at least one of the following: The terminal device is in a screen-off state, the terminal device does not enable a preset application, the terminal device does not enable a game mode or a performance mode, and the terminal device is in a first preset state (for example, a high-speed movement state). The preset application may include a program having a high requirement on a data transmission rate, for example, a game application or a live streaming application. The first preset state includes: A displacement of the terminal device in a preset time period is greater than or equal to a first preset threshold, or an average acceleration/speed of the terminal device in a preset time period is greater than or equal to a second preset threshold.

The second condition met by the terminal device includes at least one of the following: The terminal device is in a screen-on state, the terminal device enables the preset application, the terminal device enables the game mode, and the terminal device is in a second preset state (for example, a static state or a micro-movement state). The second preset state include: The displacement of the terminal device in a preset time period is less than the first preset threshold, or the average acceleration/speed of the terminal device in the preset time period is less than the second preset threshold.

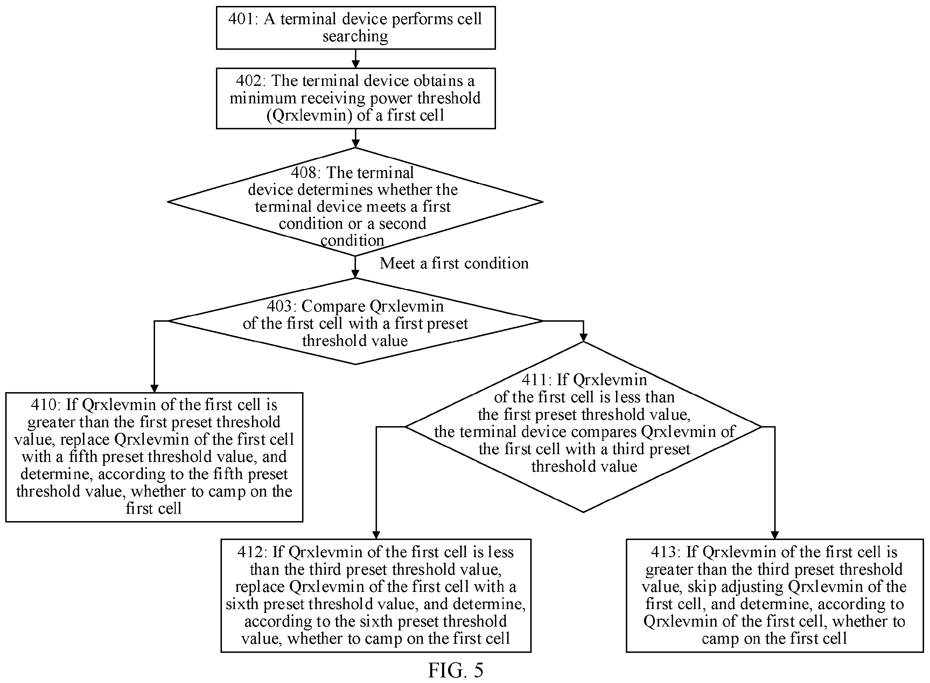

If the terminal device meets the first condition, as shown in FIG. 5, step 404 to step 407 may be replaced with the following step 410 to step 413.

410: If Qrxlevmin of the first cell is greater than the first preset threshold value, replace Qrxlevmin of the first cell with a fifth preset threshold value, and determine, according to the fifth preset threshold value, whether to camp on the first cell.

The fifth preset threshold value is less than the second preset threshold value. For example, a difference between the fifth preset threshold value and the second preset threshold value may range from 1 dB to 5 dB. The fifth preset threshold value may be preset in the terminal device in advance.

When the terminal device meets the first condition, that is, when the preset application is not enabled, when the game mode or the performance mode is not enabled, and when the terminal device is in the screen-off state or the high-speed movement state, the terminal device has a relatively low requirement on network quality. Therefore, Qrxlevmin of the first cell may be replaced with the fifth preset threshold value. Because the fifth preset threshold value is less than the second preset threshold value, a problem that the terminal device cannot camp on the first cell in a timely manner because the second preset threshold value is relatively great may be avoided.

411: If Qrxlevmin of the first cell is less than the first preset threshold value, the terminal device compares Qrxlevmin of the first cell with a third preset threshold value.

If Qrxlevmin of the first cell is less than the third preset threshold value, step 412 may be performed.

412: If Qrxlevmin of the first cell is less than the third preset threshold value, Qrxlevmin of the first cell is replaced with a sixth preset threshold value, and determine, according to the sixth preset threshold value, whether to camp on the first cell.

The sixth preset threshold value is less than the fourth preset threshold value. For example, a difference between the sixth preset threshold value and the fourth preset threshold value may range from 1 dB to 5 dB. The sixth preset threshold value may be preset in the terminal device in advance.

When the terminal device meets the first condition, that is, when the preset application is not enabled, when the game mode or the performance mode is not enabled, and when the terminal device is in the screen-off state or the high-speed movement state, the terminal device has the relatively low requirement on the network quality. Therefore, Qrxlevmin of the first cell may be replaced with the sixth preset threshold value. Because the sixth preset threshold value is less than the fourth preset threshold value, a problem that the terminal device cannot camp on the first cell in a timely manner because the fourth preset threshold value is relatively great may be avoided.

In other words, when the terminal device meets the first condition, the terminal device has the relatively low requirement on the network quality. If Qrxlevmin of the first cell is greater than the first preset threshold value, Qrxlevmin of the first cell may be replaced with the fifth preset threshold value instead of the second preset threshold value, to avoid a problem that the terminal device cannot camp on the first cell in a timely manner because the second preset threshold value is relatively great. If Qrxlevmin of the first cell is less than the third preset threshold value, Qrxlevmin of the first cell may be replaced with the sixth preset threshold value instead of the fourth preset threshold value, to avoid the problem that the terminal device cannot camp on the first cell in a timely manner because the fourth preset threshold value is relatively great.

413: If Qrxlevmin of the first cell is greater than the third preset threshold value, skip adjusting Qrxlevmin of the first cell, and determine, according to Qrxlevmin of the first cell, whether to camp on the first cell.

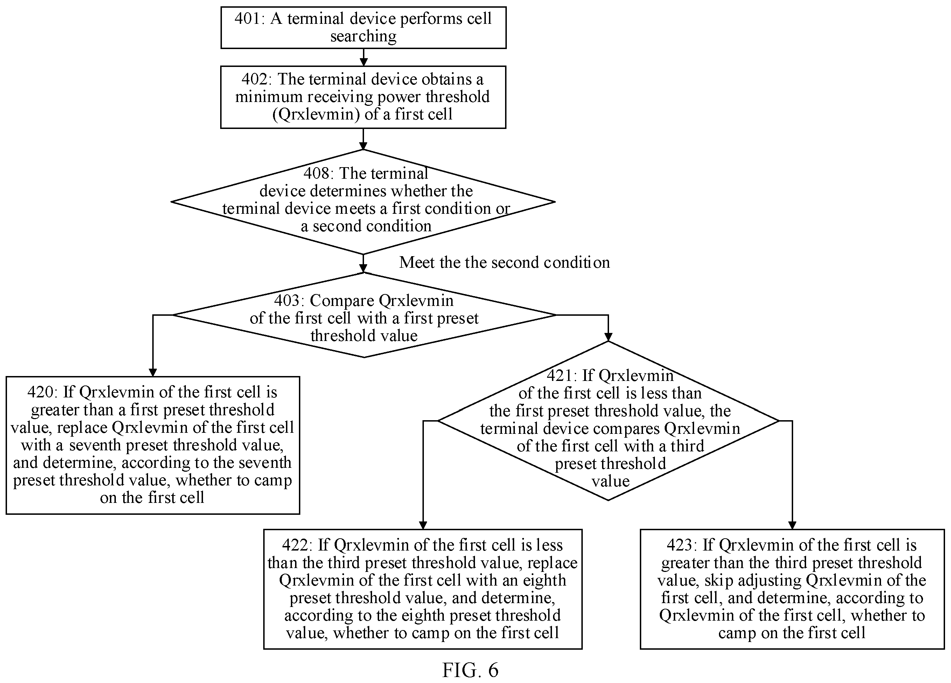

If the terminal device meets the second condition, as shown in FIG. 6, step 404 to step 407 may be replaced with the following step 420 to step 423.

420: If Qrxlevmin of the first cell is greater than the first preset threshold value, replace Qrxlevmin of the first cell with a seventh preset threshold value, and determine, according to the seventh preset threshold value, whether to camp on the first cell.

The seventh preset threshold value is greater than a second preset threshold value. For example, a difference between the seventh preset threshold value and the second preset threshold value may range from 1 dB to 5 dB. The seventh preset threshold value may be preset in the terminal device in advance.

When the terminal device meets the second condition, that is, when the preset application is enabled, when the game mode or the performance mode is enabled, when the terminal device is in the screen-on state, and when the terminal device is in the static state or the micro-movement state, the terminal device has a relatively high requirement on network quality. Therefore, Qrxlevmin of the first cell may be replaced with the seventh preset threshold value. Because the seventh preset threshold value is greater than the second preset threshold value, a problem that because the second preset threshold value is relatively small, the signal is weak after the terminal device camps on the first cell may be avoided.

421: If Qrxlevmin of the first cell is less than the first preset threshold value, the terminal device compares Qrxlevmin of the first cell with a third preset threshold value.

If Qrxlevmin of the first cell is less than the third preset threshold value, step 422 may be performed.

422: If Qrxlevmin of the first cell is less than the third preset threshold value, replace Qrxlevmin of the first cell with an eighth preset threshold value, and determine, according to the eighth preset threshold value, whether to camp on the first cell.

The eighth preset threshold value is greater than a fourth preset threshold value. For example, a difference between the eighth preset threshold value and the fourth preset threshold value may range from 1 dB to 5 dB. The eighth preset threshold value may be preset in the terminal device in advance.

When the terminal device meets the second condition, that is, when the preset application is enabled, when the game mode or the performance mode is enabled, when the terminal device is in the screen-on state, and when the terminal device is in the static state or the micro-movement state, the terminal device has the relatively high requirement on the network quality. Therefore, Qrxlevmin of the first cell may be replaced with the eighth preset threshold value. Because the eighth preset threshold value is greater than the fourth preset threshold value, a problem that because the fourth preset threshold value is relatively small, the signal is weak after the terminal device camps on the first cell may be avoided.

In other words, when the terminal device meets the second condition, the terminal device has the relatively high requirement on the network quality. If Qrxlevmin of the first cell is greater than the first preset threshold value, Qrxlevmin of the first cell may be replaced with the seventh preset threshold value instead of the second preset threshold value, to avoid a problem that because the second preset threshold value is relatively small, the signal is weak after the terminal device camps on the first cell. If Qrxlevmin of the first cell is less than the third preset threshold value, Qrxlevmin of the first cell may be replaced with the eighth preset threshold value instead of the fourth preset threshold value, to avoid the problem that because the fourth preset threshold value is relatively small, the signal is weak after the terminal device camps on the first cell.

423: If Qrxlevmin of the first cell is greater than the third preset threshold value, skip adjusting Qrxlevmin of the first cell, and determine, according to Qrxlevmin of the first cell, whether to camp on the first cell.

Further, after the terminal device adjusts Qrxlevmin of the first cell, the terminal device may perform a close loop feedback according to an adjustment result, to ensure that Qrxlevmin of the first cell is more properly adjusted. For example, after the terminal device adjusts Qrxlevmin of the first cell and camps on the first cell, whether the terminal device has a service abnormality in the first cell may be monitored. For a case in which there is no abnormality, Qrxlevmin of the first cell may be normally adjusted, so that a problem that the terminal device cannot camp on the first cell because Qrxlevmin configured by the first cell is excessively great, or a problem that because Qrxlevmin configured by the first cell is excessively small, a signal is weak after the terminal device camps on the first cell, and then the terminal device quickly switches to another cell or another network may be avoided. For a case in which there is an abnormality, adjustment on Qrxlevmin of the first cell is stopped, to avoid a problem that the service abnormality occurs after the terminal device camps on the first cell.

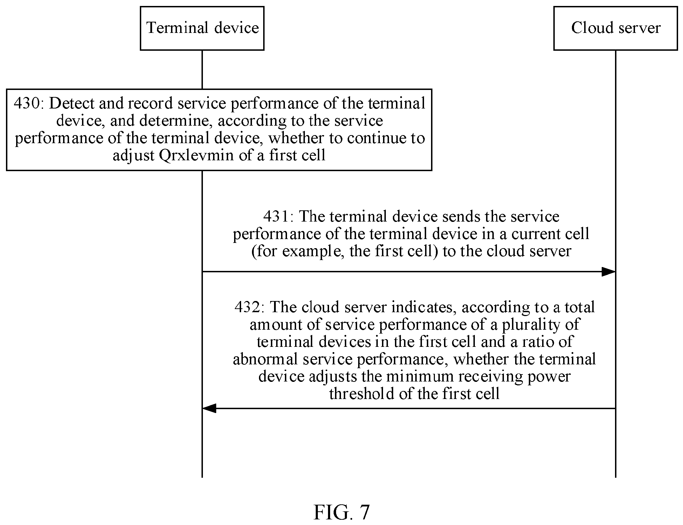

Further, after step 404, step 406, step 410, step 412, step 420, or step 422, as shown in FIG. 7, the following step 430 to step 432 may be further included.

430: Detect and record service performance of the terminal device, and determine, according to the service performance of the terminal device, whether to continue to adjust Qrxlevmin of the first cell.

After adjusting a minimum receiving power threshold (namely, Qrxlevmin) of a current cell (for example, the first cell) each time, the terminal device may continuously detect and record the service performance of the terminal device in the current cell. Further, the terminal device may send the service performance of the terminal device in the current cell (for example, the first cell) to a cloud server.

The service performance of the terminal device in the current cell includes normal service performance and abnormal service performance. The abnormal service performance includes at least one of the following abnormal performance that can be perceived by a user: a data service lag, an abnormality in an incoming call, a voice lag in a call.

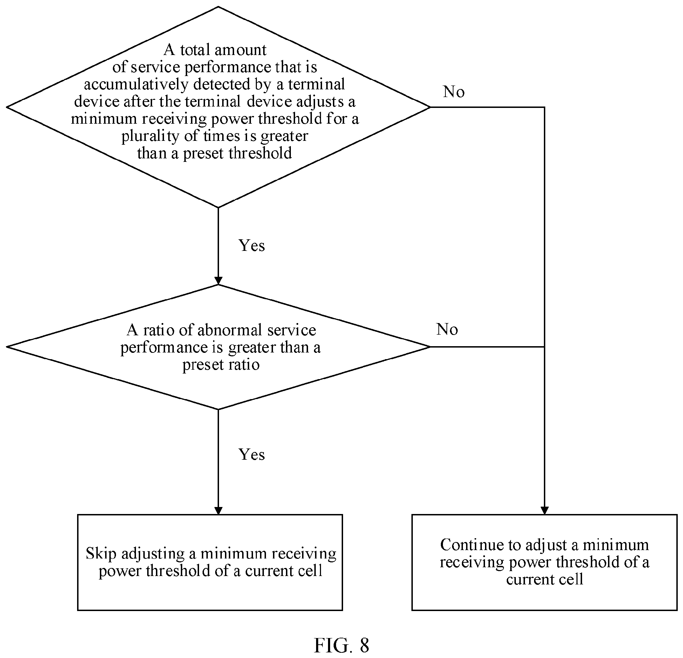

In some implementations, as shown in FIG. 8, if a total amount of the service performance that is accumulatively detected by the terminal device after the terminal device adjusts the minimum receiving power threshold for a plurality of times is greater than a preset threshold (for example, M pieces, where M is an integer greater than 1), and a ratio (namely, a ratio of the abnormal service performance) of an amount of the abnormal service performance that is detected by the terminal device to an amount of all service performance of the terminal device (namely, the total amount of the service performance) is greater than a preset ratio (for example, P%, where P is greater than 0), adjustment on the minimum receiving power threshold of the current cell may be stopped. Otherwise, adjustment on the minimum receiving power threshold of the current cell may be continued.

For example, Table 1 shows the total amount of the service performance of the terminal device in the first cell and a corresponding ratio of the abnormal service performance that are recorded after the terminal device adjusts the minimum receiving power threshold of the first cell.

**Table 1**

| Current cell | Quantity of times that a minimum receiving power threshold is adjusted | Total amount of service performance | Ratio of abnormal service performance |
|---|---|---|---|
| First cell | 8 | 200 | 30% |

It can be learnt from Table 1 that, the terminal device adjusts Qrxlevmin of the first cell for a total of eight times, the total amount of the recorded service performance is 200, and the ratio of the abnormal service performance is 30%. It is assumed that M = 100 and P% = 50%. Because 100 < 200 and 30% < 50%, it indicates that adjustment performed by the terminal device on Qrxlevmin of the first cell is within a proper range. Therefore, the terminal device may continue to adjust the minimum receiving power threshold of the first cell subsequently, to avoid a problem that the terminal device cannot camp on the first cell because Qrxlevmin configured by the first cell is excessively great, or a problem that because Qrxlevmin configured by the first cell is excessively small, a signal is weak after the terminal device camps on the first cell, and then the terminal device quickly switches to another cell or another network.

In some other implementations, if the terminal device adjusts the minimum receiving power threshold of the current cell (for example, the first cell) to different threshold values, and detects that the total amount of the service performance that corresponds to a corresponding threshold value (for example, any one of a second preset threshold value, a fourth preset threshold value, a fifth preset threshold value, a sixth preset threshold value, a seventh preset threshold value, and an eighth preset threshold value) is greater than a preset threshold (for example, Y pieces, where Y is an integer greater than 1), and a ratio (namely, the ratio of the abnormal service performance) of the amount of the abnormal service performance that corresponds to the corresponding threshold value to the total amount of the service performance is greater than a preset ratio (for example, Q%, where Q is greater than 0), the minimum receiving power threshold of the current cell is no longer adjusted to the corresponding threshold value. Otherwise, the minimum receiving power threshold of the current cell may continue to be adjusted to the corresponding threshold value.

For example, Table 2 shows a total amount of the service performance of the terminal device in the first cell and a corresponding ratio of the abnormal service performance that are recorded after the terminal device adjusts the minimum receiving power threshold to different threshold values.

**Table 2**

| Current cell | Adjusted minimum receiving power threshold | Total amount of service performance | Ratio of abnormal service performance |
|---|---|---|---|
| First cell | Second preset threshold value | 100 | 10% |
| | Fourth preset threshold value | 110 | 60% |
| | Fifth preset threshold value | 80 | 30% |
| | Sixth preset threshold value | 64 | 45% |
| | Seventh preset threshold value | 96 | 50% |
| | Eighth preset threshold value | 36 | 80% |

For example, it can be learnt from Table 2 that, after the terminal device adjusts Qrxlevmin of the first cell to the second preset threshold value, the total amount of the service performance that is detected and recorded is 100, and the ratio of the abnormal service performance is 10%. It is assumed that Y = 30, and Q% = 50%. Because 100 > 30 and 10% < 50%, it indicates a case in which the terminal device adjusts the minimum receiving power threshold to the second preset threshold value is proper. Therefore, the terminal device may subsequently continue to adjust the minimum receiving power threshold to the second preset threshold value when meeting a corresponding condition (that is, Qrxlevmin of the first cell is greater than the first preset threshold value), to avoid the problem that the terminal device cannot camp on the first cell because Qrxlevmin configured by the first cell is excessively great.

For another example, it can be learnt from Table 2 that, after the terminal device adjusts Qrxlevmin of the first cell to the eighth preset threshold value, the total amount of the service performance that is recorded and detected is 36, and the ratio of the abnormal service performance is 80%. It is assumed that Y = 30, and Q% = 50%. Because 36 > 30 and 80% > 50%, it indicates that a case in which the terminal device adjusts the minimum receiving power threshold to the second preset threshold value is improper. Therefore, the terminal device subsequently stops adjusting the minimum receiving power threshold to the second preset threshold value when meeting a corresponding condition (that is, Qrxlevmin of the first cell is greater than the first preset threshold value), to avoid a problem that the service abnormality occurs after the terminal device camps on the first cell.

431: The terminal device sends the service performance of the terminal device in the current cell (for example, the first cell) to the cloud server.

432: The cloud server indicates, according to a total amount of service performance of a plurality of terminal devices in the first cell and a ratio of abnormal service performance, whether the terminal device adjusts the minimum receiving power threshold of the first cell.

The cloud server may separately receive the service performance of the terminal devices from the plurality of terminal devices in the first cell.

The cloud server may count the total amount of the service performance of the plurality of terminal devices in the first cell and calculate the ratio of the abnormal service performance (a ratio of the amount of the abnormal service performance of the plurality of terminal devices in the first cell to the total amount of the service performance of the plurality of terminal devices in the first cell).

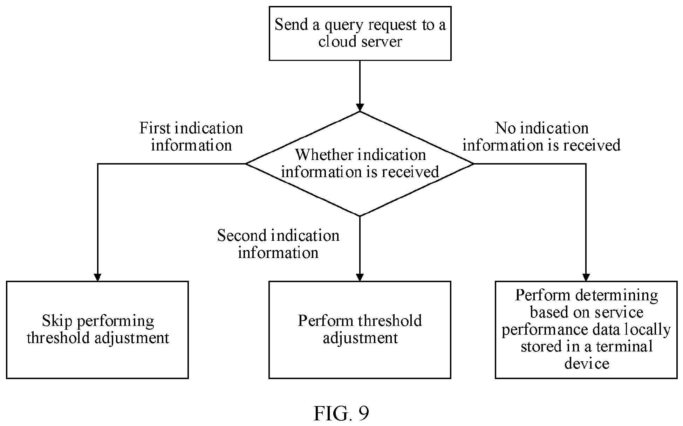

In some embodiments, as shown in FIG. 9, the terminal device may send a query request to the cloud server. The query request is used to query whether the cloud server records service performance data of a current cell (for example, the first cell). After the cloud server receives the query request, if the cloud server determines that the total amount of the service performance of the plurality of terminal devices in the first cell exceeds a preset amount (for example, R pieces, where R is greater than 1), and the ratio of the abnormal service performance is greater than a preset ratio (for example, L%, where L is greater than 0), the cloud server may send first indication information to the terminal device (any one of the plurality of terminal devices in the first cell). The first indication information is used to indicate to stop adjusting the minimum receiving power threshold of the first cell. Otherwise, second indication information may be sent to the terminal device (any one of the plurality of terminal devices in the first cell). The second indication information is used to indicate that the minimum receiving power threshold of the current cell can be adjusted. If the terminal device does not receive indication information (for example, the first indication information or the second indication information) from the cloud server, determining may be performed based on service performance data locally stored in the terminal device. For a determining logic, refer to related descriptions of step 430, and details are not described herein again.

In some embodiments, the cloud server may distinguish the total amount of the service performance corresponding to the plurality of terminal devices at different thresholds (that is, the terminal device adjusts the minimum receiving power threshold of the current cell (for example, the first cell) to different threshold values). If the total amount of the service performance corresponding to the plurality of terminal devices at the different thresholds (for example, any one of the second preset threshold value, the fourth preset threshold value, the fifth preset threshold value, the sixth preset threshold value, the seventh preset threshold value, and the eighth preset threshold value) is greater than a preset threshold (for example, Y pieces, where Y is an integer greater than 1), and the ratio (namely, a ratio of the abnormal service performance) of the amount of the abnormal service performance corresponding to the corresponding threshold value to the total amount of the service performance corresponding to the corresponding threshold value is greater than the preset ratio (for example, W%, where W% is greater than 0), the terminal device is indicated to stop adjusting the minimum receiving power threshold of the current cell to the corresponding threshold value. Otherwise, the terminal device is indicated to adjust the minimum receiving power threshold of the current cell to the corresponding threshold value.

Based on the method provided in the embodiments of this application, Qrxlevmin of the first cell may be dynamically adjusted. When Qrxlevmin of the first cell is greater than the first preset threshold value, it indicates that Qrxlevmin of the first cell is excessively great (that is, greater than the minimum receiving power thresholds of the majority of cells). In this case, Qrxlevmin of the first cell may be adjusted. For example, Qrxlevmin of the first cell is replaced with the second preset threshold value, and then whether to camp on the first cell is determined according to the second preset threshold value. In this way, the problem that the terminal device cannot camp on the first cell because Qrxlevmin configured by the first cell is excessively great may be avoided. When Qrxlevmin of the first cell is less than the third preset threshold value, it indicates that Qrxlevmin of the first cell is excessively small (that is, less than the minimum receiving power thresholds of the majority of cells). In this case, Qrxlevmin of the first cell may be adjusted. For example, Qrxlevmin of the first cell is replaced with the fourth preset threshold value, and then whether to camp on the first cell is determined according to the fourth preset threshold value. In this way, the problem that because Qrxlevmin configured by the first cell is excessively small, a signal is weak after the terminal device camps on the first cell, and then the terminal device quickly switches to another cell or another network may be avoided.

In some embodiments, Qrxlevmin of the first cell may be adjusted differently with reference to the condition (for example, the first condition or the second condition) met by the terminal device. When the terminal device meets the first condition, the terminal device has the relatively low requirement on the network quality. If Qrxlevmin of the first cell is greater than the first preset threshold value, Qrxlevmin of the first cell may be replaced with the fifth preset threshold value instead of the second preset threshold value, to avoid a problem that the terminal device cannot camp on the first cell in a timely manner because the second preset threshold value is relatively great. If Qrxlevmin of the first cell is less than a third preset threshold value, Qrxlevmin of the first cell may be replaced with the sixth preset threshold value instead of the fourth preset threshold value, to avoid the problem that the terminal device cannot camp on the first cell in a timely manner because the fourth preset threshold value is relatively great. When the terminal device meets the second condition, the terminal device has the relatively high requirement on the network quality. If Qrxlevmin of the first cell is greater than the first preset threshold value, Qrxlevmin of the first cell may be replaced with the seventh preset threshold value instead of the second preset threshold value, to avoid a problem that because the second preset threshold value is relatively small, the signal is weak after the terminal device camps on the first cell. If Qrxlevmin of the first cell is less than the third preset threshold value, Qrxlevmin of the first cell may be replaced with the eighth preset threshold value instead of the fourth preset threshold value, to avoid the problem that because the fourth preset threshold value is relatively small, the signal is weak after the terminal device camps on the first cell.

Further, after the terminal device adjusts Qrxlevmin of the first cell, the terminal device may perform a close loop feedback according to an adjustment result, to ensure that Qrxlevmin of the first cell is more properly adjusted. For example, after the terminal device adjusts Qrxlevmin of the first cell and camps on the first cell, whether the terminal device has the service abnormality in the first cell may be monitored. For normal adjustment without abnormalities, the problem that the terminal device cannot camp on the first cell because Qrxlevmin configured by the first cell is excessively great, or the problem that because Qrxlevmin configured by the first cell is excessively small, a signal is weak after the terminal device camps on the first cell, and then the terminal device quickly switches to another cell or another network is avoided. For normal adjustment without abnormalities, Qrxlevmin of the first cell is no longer adjusted, to avoid the problem of the service abnormality after the terminal device camps on the first cell.

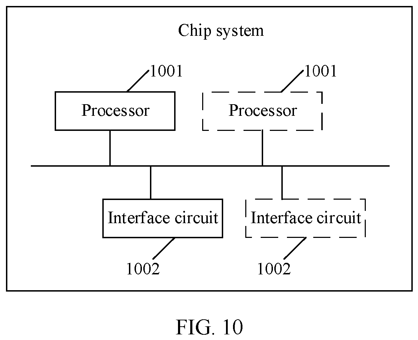

An embodiment of this application further provides a chip system. As shown in FIG. 10, the chip system includes at least one processor 1001 (for example, an AP and a BP) and at least one interface circuit 1002. The processor 1001 and the interface circuit 1002 may be interconnected by lines. For example, the interface circuit 1002 may be configured to receive a signal from another apparatus (for example, a memory of a terminal device). For another example, the interface circuit 1002 may be configured to send a signal to another apparatus (for example, the processor 1001).

For example, the interface circuit 1002 can read instructions stored in the memory of the terminal device and send the instructions to the processor 1001. When the instructions are executed by the processor 1001, the terminal device (the electronic device 200 shown in FIG. 2) or a cloud server (the communication device 300 shown in FIG. 3) may be enabled to perform the steps in the foregoing embodiments.

Certainly, the chip system may further include other discrete devices. This is not specifically limited in the embodiments of this application.

An embodiment of this application further provides a computer-readable storage medium. The computer-readable storage medium includes computer instructions. When the computer instructions are run on the terminal device (the electronic device 200 shown in FIG. 2), the electronic device 200 (for example, a UE) is enabled to perform the functions or the steps performed by the terminal device in the foregoing method embodiments. When the computer instructions are run on the cloud server (the communication device 300 shown in FIG. 3), the communication device 300 is enabled to perform the functions or the steps performed by the cloud server in the foregoing method embodiments.

An embodiment of this application further provides a computer program product. When the computer program product is run on a computer, the computer is enabled to perform the functions or the steps performed by a terminal device or a cloud server in the foregoing method embodiments.

An embodiment of this application further provides a processing apparatus. The processing apparatus may be divided into different logical units or modules according to functions, and the units or the modules perform different functions, to enable the processing apparatus to perform the functions or the steps performed by a terminal device or a cloud server in the foregoing method embodiments.

Through the descriptions of the foregoing implementations, a person skilled in the art may clearly understand that, the foregoing functions may be allocated to and completed by different functional modules according to requirements. That is, an inner structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to actual needs to achieve the objectives of the solutions of the embodiments.

In addition, functional units in the embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes: any medium that can store program code, such as a USB flash drive, a removable hard disk, a read-only memory (read only memory, ROM), a random access memory (random access memory, RAM), a magnetic disk, or a compact disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A cell camping method, comprising:
performing, by a terminal device, cell searching, wherein a found cell comprises a first cell;
obtaining, by the terminal device, a minimum receiving power threshold of the first cell;
if the minimum receiving power threshold is greater than a first preset threshold value, replacing the minimum receiving power threshold with a second preset threshold value, wherein the first preset threshold value is greater than or equal to the second preset threshold value; and
determining, according to the second preset threshold value, whether to camp on the first cell.

2. The method according to claim 1, wherein the determining, according to the second preset threshold value, whether to camp on the first cell comprises:
when a reference signal receiving power of the first cell is greater than the second preset threshold value, camping, by the terminal device, on the first cell.

3. The method according to claim 1 or 2, wherein the method further comprises:
if the minimum receiving power threshold is less than a third preset threshold value, replacing the minimum receiving power threshold with a fourth preset threshold value, and determining, according to the fourth preset threshold value, whether to camp on the first cell, wherein the third preset threshold value is less than or equal to the fourth preset threshold value.

4. The method according to claim 3, wherein the determining, according to the fourth preset threshold value, whether to camp on the first cell comprises:
when the reference signal receiving power of the first cell is greater than the fourth preset threshold value, camping, by the terminal device, on the first cell.

5. The method according to claim 3 or 4, wherein the third preset threshold value is less than the first preset threshold value.

6. The method according to any one of claims 1 to 5, further comprising:
when the terminal device meets a first condition, if the minimum receiving power threshold is greater than the first preset threshold value, replacing the minimum receiving power threshold with a fifth preset threshold value, and determining, according to the fifth preset threshold value, whether to camp on the first cell, wherein the fifth preset threshold value is less than the second preset threshold value, wherein
the first condition met by the terminal device comprises at least one of the following:
the terminal device is in a screen-off state, the terminal device does not enable a preset application, the terminal device does not enable a game mode, and the terminal device is in a first preset state, wherein the first preset state comprises: a displacement of the terminal device in a preset time period is greater than or equal to a first preset threshold, or an average acceleration/speed of the terminal device in a preset time period is greater than or equal to a second preset threshold.

7. The method according to claim 6, further comprising:
when the terminal device meets the first condition, if the minimum receiving power threshold is less than the third preset threshold value, replacing the minimum receiving power threshold with a sixth preset threshold value, and determining, according to the sixth preset threshold value, whether to camp on the first cell, wherein the sixth preset threshold value is less than the fourth preset threshold value.

8. The method according to any one of claims 1 to 5, further comprising:
when the terminal device meets a second condition, if the minimum receiving power threshold is greater than the first preset threshold value, replacing the minimum receiving power threshold with a seventh preset threshold value, and determining, according to the seventh preset threshold value, whether to camp on the first cell, wherein the seventh preset threshold value is greater than the second preset threshold value, wherein
the second condition met by the terminal device comprises at least one of the following:
the terminal device is in a screen-on state, the terminal device enables a preset application, the terminal device enables a game mode, and the terminal device is in a second preset state, wherein the second preset state comprises: a displacement of the terminal device in a preset time period is less than a first preset threshold, or an average acceleration/speed of the terminal device in a preset time period is less than a second preset threshold.

9. The method according to claim 8, further comprising:
when the terminal device meets the second condition, if the minimum receiving power threshold is less than the third preset threshold value, replacing the minimum receiving power threshold with an eighth preset threshold value, and determining, according to the eighth preset threshold value, whether to camp on the first cell, wherein the eighth preset threshold value is greater than the fourth preset threshold value.

10. The method according to any one of claims 1 to 9, wherein
the second preset threshold value or the fourth preset threshold value is determined according to minimum receiving power thresholds of a plurality of cells.

11. The method according to any one of claims 1 to 10, wherein after the camping, by the terminal device, on the first cell, the method further comprises:
recording service performance of the terminal device, wherein the service performance comprises normal service performance and abnormal service performance; and
if a total amount of the service performance of the terminal device is greater than a third preset threshold, and a ratio of an amount of the abnormal service performance to the total amount of the service performance is greater than a fourth preset threshold, stopping adjusting the minimum receiving power threshold.

12. The method according to claim 11, wherein the abnormal service performance comprises at least one of the following: a data service lag, an abnormality in an incoming call, a voice lag in a call:

13. The method according to claim 11 or 12, further comprising:
sending, to a cloud server, the total amount of the service performance recorded by the terminal device, wherein the total amount of the service performance comprises an amount of the normal service performance and the amount of the abnormal service performance.

14. The method according to any one of claims 11 to 13, further comprising:
receiving first indication information from the cloud server, wherein the first indication information is used to indicate to stop adjusting the minimum receiving power threshold of the first cell.

15. A communication method, comprising:
receiving, by a cloud server, an amount of service performance that is separately recorded after a plurality of terminal devices adjust a minimum receiving power threshold of a first cell and camp on the first cell, wherein the service performance comprises normal service performance and abnormal service performance; and
respectively sending first indication information to the plurality of the terminal devices if a total amount of the service performance of the plurality of the terminal devices is greater than a fifth preset threshold and a ratio of an amount of the abnormal service performance of the plurality of the terminal devices to the total amount of the service performance of the plurality of terminal devices is greater than a sixth preset threshold, wherein the first indication information is used to indicate to stop adjusting the minimum receiving power threshold of the first cell.

16. The method according to claim 15, wherein the abnormal service performance comprises at least one of the following: a data service lag, an abnormality in an incoming call, a voice lag in a call.

17. A terminal device, wherein the terminal device comprises: a wireless communication module, a memory, and one or more processors, wherein the wireless communication module and the memory are coupled to the one or more processors, wherein
the memory is configured to store computer program code, and the computer program code comprises computer instructions; and when the computer instructions are executed by the one or more processors, the terminal device is enabled to perform the method according to any one of claims 1 to 14.

18. A cloud server, wherein the cloud server comprises: a wireless communication module, a memory, and one or more processors; and the wireless communication module and the memory are coupled to the one or more processors, wherein
the memory is configured to store computer program code, and the computer program code comprises computer instructions; and when the computer instructions are executed by the one or more processors, the cloud server is enabled to perform the method according to claim 15 or 16.

19. A communication system, comprising a terminal device and a cloud server, wherein the terminal device performs the method according to any one of claims 1 to 14, and the cloud server performs the method according to claim 15 or 16.

20. A computer-readable storage medium, comprising computer instructions, wherein
when the computer instructions are run on a terminal device, the terminal device is enabled to perform the method according to any one of claims 1 to 14; or
when the computer instructions are run on a cloud server, the cloud server is enabled to perform the method according to claim 15 or 16.
